# EUROPEAN PATENT APPLICATION

(11) **EP 1 965 385 A1**
(43) Date of publication of application: **03.09.2008**
(21) Application number: 07123826.5
(22) Date of filing: 20.12.2007
(51) Int. Cl.: G11B 20/10, G06F 3/06

(54) **Storage device control apparatus, storage device, and data storage control method**

(30) Priority: 28.02.2007 JP 2007050366
(71) Applicant: Fujitsu Ltd., Kawasaki-shi, Kanagawa 211-8588 (JP)
(72) Inventor: Haga, Tatsuya c/o FUJITSU LIMITED, Kawasaki-shi, Kanagawa 211-8588 (JP)
(74) Representative: Fenlon, Christine Lesley

(57) **Abstract**

A storage device stores data therein corresponding to commands from a host computer and includes a buffer memory temporarily storing the data received from the host computer. A data storage control method for the storage device sequentially writes the data already temporarily stored in the buffer memory to a storage medium until a specific period elapses since reception of a write command, which is received after vibrations in the storage device are detected. When the specific period elapses, a write command completion response is transmitted to the host computer.

## Description

### BACKGROUND OF THE INVENTION

### 1. Field of the Invention

The present invention relates to a storage device control apparatus, a storage device, and a data storage control method that exchange data between a host computer and a storage medium via a data buffer that temporarily stores the data corresponding to commands received from the host computer and transmit to the host computer command completion responses for the commands when the data is temporarily stored in the data buffer. The present invention more particularly relates to the storage device control apparatus, the storage device, and the data storage control method that deal properly with vibrations when read/write operation delay occurs due to the vibrations detected in the storage device, and that avoid delay in transmitting the command completion responses to the host computer by preventing a deficiency in a capacity of free buffer memory.

### 2. Description of the Related Art

A storage device that houses a storage medium includes a buffer memory for temporary storage of data exchanged between a host computer and the storage medium. In such a storage device, write data corresponding to write commands from the host computer is stored in the buffer memory, the write data is sequentially read out from the buffer memory, and a control is exerted to write the write data to the storage medium. Similarly, read data corresponding to read commands from the host computer is read out from the storage medium and stored in the buffer memory, and a control is exerted to sequentially read out the read data from the buffer memory and transmit the read data to the host computer.

In such a system, when the write data is received along with the write commands from an operating system (OS) of the host computer, the write data corresponding to the write commands need not be written to the storage medium in order for the write command completion responses to be transmitted to the host computer. Merely reception of the write data is enough for the write command completion responses to be transmitted. The write commands corresponding to the write data not written to the storage medium are temporarily queued. Then, the write data is written to the storage medium using a background process of the host computer after the write data corresponding to the write commands is temporarily stored in the buffer memory.

Corresponding to the read commands from the host computer, the read data corresponding to the read commands is read out from the storage medium to the buffer memory, and when transmitted from the buffer memory to the host computer, read command completion responses are transmitted to the host computer.

However, the number of commands that can be queued and the capacity of the buffer memory for temporarily storing the read/write data are limited. Therefore, when free buffer memory decreases, command queuing and temporary storage of the data corresponding to the commands in the buffer memory become impossible and due to which the command completion responses cannot be transmitted to the host computer. In this situation, a predetermined number of commands are queued and free area is secured in the queuing and in the buffer memory. The data corresponding to the commands starts getting temporarily stored at a transfer rate of one sector (sector-wise) in the buffer memory and then, the command completion responses are transmitted to the host computer.

In recent years, computers have undergone miniaturization as typified by notebook-size personal computers and the storage devices are often disposed very close to speakers. When the host computer is such a small computer, the vibrations generated by the sound from the speakers can easily travel to the storage device. Due to the vibrations, there may be a delay in data writing to the storage medium in the storage device. In other words, due to the vibrations, the data writing to the storage device takes longer than usual.

In spite of a writing delay caused due to the vibrations, if the write data continues to be received from the host computer, the free buffer memory area falls short. Consequently, the write data corresponding to the write commands cannot be temporarily stored in the buffer memory and the write command completion responses cannot be transmitted to the host computer.

Similarly, in spite of the writing delay caused due to the vibrations, if the read commands continue to be received from the host computer, the free buffer memory area fails short. Therefore, the read data corresponding to the read commands cannot be temporarily stored in the buffer memory and the read command completion responses cannot be transmitted to the host computer.

For example, in the operating systems such as Windows (registered trademark), when it is detected that the command completion responses are not transmitted from the storage device even after a predetermined time has elapsed, it is reported as a fatal error. When a warning is generated, the OS in the host computer shuts down the system and a user is prompted to respond appropriately (for example, rebooting a computer etc.).

Various technologies are suggested to avoid such a system failure. For example, in a technology disclosed in Japanese Patent Application Laid-open No. 2001-5724, in the storage device, after completing data reception by the buffer memory, the buffer memory requests the next data transmission at regular intervals. If the next data transmission is delayed, the technology described above enables securing the buffer memory capacity to some extent, avoid inability to temporarily store in the buffer memory the data corresponding to the commands, and control a situation in which the command completion responses cannot be transmitted to the host computer.

In the storage device according to the technology disclosed in Japanese Patent Application Laid-open No. 2005-309980, while writing the write data to the storage medium through the background process of the host computer, when a command that needs to be executed in real time, such as a read command, is received, the background process is discontinued and an operation responding to the read command is performed first. Thus, the technology described above enables avoiding the delay in transmitting the read command completion response to the host computer.

In the storage device according to the technology disclosed in Japanese Patent Application Laid-open No. H10-275059, the sequence of execution of the queued commands is so determined as to maximize data read/write efficiency, enabling rapid data reading and writing. The technology described above enables reducing time required for data reading from and data writing to the storage device, preventing the shortage of the free buffer memory, and avoiding the delay in transmitting the command completion responses to the host computer.

However, in the technologies described above, under normal operating conditions, the storage device prevents the shortage of the free buffer memory and avoids the delay in transmitting the command completion responses to the host computer. However, when the read/write delay occurs due to the vibrations detected in the storage device, the technologies described above fail to cope up with the vibrations, prevent the insufficient capacity of the free buffer memory, and avoid the delay in transmitting the command completion responses to the host computer.

### SUMMARY OF THE INVENTION

It is desirable to at least partially solve the problems in the conventional technology.

According to an embodiment of an aspect of the present invention, a storage device control apparatus controls a storage device to exchange data between a host computer and the storage device via a data buffer temporarily storing the data corresponding to commands received from the host computer. The storage device control apparatus includes a vibration detecting unit that detects vibrations in the storage device; and a data writing control unit that preferentially writes the write data stored in the data buffer to the storage medium in a specific period when the vibrations are detected in the storage device by the vibration detecting unit.

According to an embodiment of another aspect of the present invention, a storage device stores data in a storage medium and exchanges the data between a host and the storage medium corresponding to commands from a host computer. The storage device includes a data buffer that temporarily stores the data received from the host computer; a vibration detecting unit that detects vibrations in the storage device; and a data writing control unit that preferentially writes the write data stored in the data buffer to the storage medium in a specific period when the vibrations are detected in the storage device by the vibration detecting unit.

According to an embodiment of still another aspect of the present invention, a data storage control method controls a storage device so that data is exchanged between a host computer and a storage medium via a data buffer that temporarily stores the data corresponding to commands received from the host computer. The storage control method includes detecting vibrations in the storage device; and preferentially writing the write data stored in the data buffer to the storage medium in a specific time when the vibrations are detected at the detecting.

The above and other features, advantages and technical and industrial significance of this invention will be better understood by reading the following detailed description of presently preferred embodiments of the invention, when considered in connection with the accompanying drawings

### BRIEF DESCRIPTION OF THE DRAWINGS

Fig. 1 is a schematic for explaining a write command control in a conventional magnetic disk device;
Fig. 2 is a schematic for explaining salient features of the write command control in a magnetic disk device according to an embodiment;
Fig. 3 is a functional block diagram of the magnetic disk device according to the embodiment;
Fig. 4 is a flowchart of a process upon reception of write commands; and
Fig. 5 is a flowchart of a process upon reception of read commands.

### DETAILED DESCRIPTION OF THE PREFERRED EMBODIMENTS

Exemplary embodiments of the storage device control apparatus, the storage device, and the data storage control method according to the present invention are explained below with reference to the accompanying drawings. The present invention is best applied to a storage device of a compact computer device such as a notebook-size personal computer in which speakers (acoustic devices) are disposed adjacent to the storage device.

The term "command(s)" that appears in the embodiments described below refers to write command and/or read command. The write command is a data write request transmitted from a host computer to a magnetic disk device for writing data to a magnetic disk. The data to be written to the magnetic disk corresponding to the write command is referred to as write data or write command data. The write command data is temporarily stored in a buffer memory before a write command completion response is transmitted to the host computer.

Similarly, the read command is a data read request transmitted from the host computer to the magnetic disk device for reading the data from the magnetic disk. The data to be read from the magnetic disk corresponding to the read command is referred to as read data or read command data. The read command data is temporarily stored in the buffer memory before a read command completion response is transmitted to the host computer. The term "command data" that appears in the embodiments described below refers to write command data and/or read command data. Similarly, the term "command completion response" refers to write command completion response and/or read command completion response.

In the embodiments described below, the present invention is applied to the magnetic disk and the magnetic disk device that serve as a storage medium and a storage device, respectively. However, the present invention is not to be thus limited and can be applied to other storage media and disk devices such as an optical disk and an optical disk device, or a magneto optical disk and a magneto optical disk device.

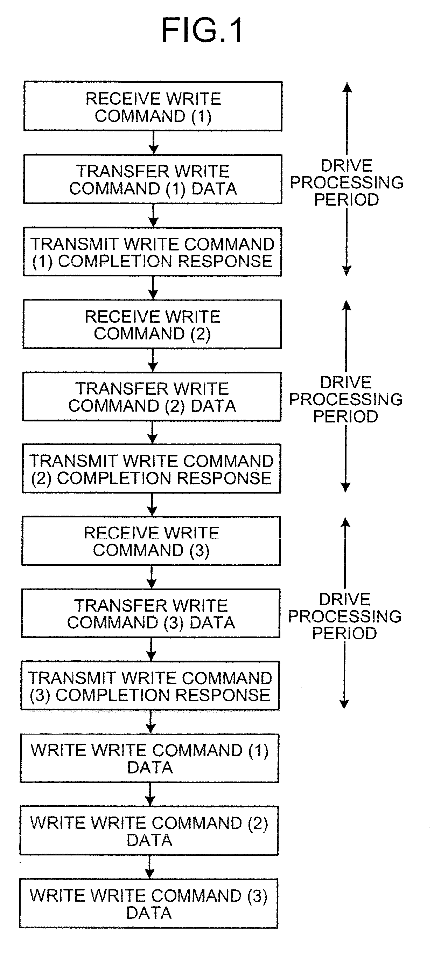

A write command control in a conventional magnetic disk device is explained below. Fig. 1 is a schematic for explaining the write command control in a conventional magnetic disk device. The write command is a write request to the magnetic disk of the magnetic disk device from an operating system (OS) of the host computer to which the magnetic disk device is connected. As shown in Fig. 1, it is supposed that the write commands (1), (2), and (3) are transmitted sequentially in succession from the host computer.

The write command control is an execution sequence control for a series of processes (the processes are referred to as drive processes and a processing time for the processes is referred to as drive processing period) that include receiving the write commands from the host computer, transferring (transmitting) to the magnetic disk the write command data (write data) corresponding to the write commands issued by the host computer and stored in the buffer memory of the magnetic disk device, transmitting to the host computer the write command completion responses corresponding to the received write commands, and writing to the magnetic disk the write command data corresponding to the write commands.

The execution sequence control refers to controlling the execution sequence of the series of processes described above for a plurality of write commands when a plurality of sets of write commands and the corresponding write command data are transmitted from the host computer.

As shown in Fig. 1, the magnetic disk device receives the write command (1). Following the write command (1), the magnetic disk device receives and temporarily stores write command (1) data corresponding to the write command (1) in the buffer memory, and transmits the command completion response for the write command (1) to the host computer indicating that the write command (1) data corresponding to the write command (1) is received.

Next, the magnetic disk device receives the write command (2). Following the write command (2), the magnetic disk device receives and temporarily stores write command (2) data corresponding to the write command (2) in the buffer memory, and transmits the command completion response for the write command (2) to the host computer indicating that the write command (2) data corresponding to the write command (2) is received. A similar series of processes is carried out in succession for the write command (3).

When the command completion response of the write command (3) is transmitted to the host computer, the magnetic disk device sequentially carries out write command data writing processes (1), (2), and (3) corresponding to the write commands (1), (2), and (3), respectively, to the magnetic disk.

Once the write command data is written to the magnetic disk, the storage area used for the write command data in the buffer memory is freed. The area thus released is used for temporary storage of the write command data corresponding to subsequent write commands.

Thus, the conventional magnetic disk device receives the write commands sequentially and transmits the write command completion responses to the host computer, indicating that the write command data corresponding to the write commands have been stored in the buffer memory. If no further write command is received or if the buffer memory usage drops to a predetermined percent value, the magnetic disk device writes to the magnetic disk all the write command data in one go.

Here, the processing time required for writing the write command data to the magnetic disk is more than the processing time required for receiving the write command and transferring the write command data. Therefore, the write command completion response is transmitted to the host computer before writing the write command data to the magnetic disk. Thus, the buffer memory is utilized for its original purpose, which is to free the host computer from an I/O interruption control.

However, conventional methods have the following drawback. When a delay occurs in writing the write command data to the magnetic disk due to the vibrations detected in the magnetic disk device, freeing the buffer memory area occupied by the corresponding write command data is also delayed. The delay may not pose any problem if free buffer memory area is available and new commands can be received. However, if no free buffer memory area is available and new commands cannot be received, the command completion responses corresponding to the new commands cannot be transmitted to the host computer and an error may be recognized on the host computer side.

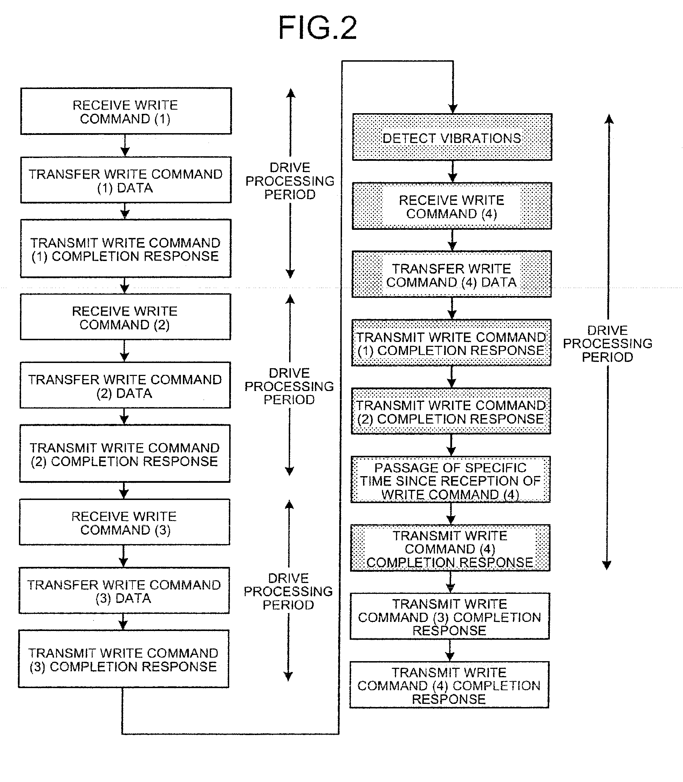

To solve the above problem, the write command control as described below is carried out in the embodiment of the present invention. Fig. 2 is a schematic for explaining salient features of the write command control in the magnetic disk device according to the embodiment. As shown in Fig. 2, it is supposed that the write commands (1), (2), (3), and (4) are transmitted sequentially in succession from the host computer.

As shown in Fig. 2, for the write commands (1) to (3), the magnetic disk device carries out a set of processes that includes receiving the write command, receiving and temporarily storing the write command data in the buffer memory, and transmitting the command completion response to the host computer.

If the write command (4) is received immediately after detection of vibrations in the magnetic disk device, write command (4) data is transferred. However, a write command (4) completion response is not immediately transmitted to the host computer, and the write command data that is already temporarily stored in the buffer memory is written to the magnetic disk.

As shown in an example in Fig. 2, the write command data (1), (2), and (3) already temporarily stored in the buffer memory are sequentially written to the magnetic disk till a specific period has elapsed since reception of the write command (4). In Fig. 2, it is shown that the write command (1) data and the write command (2) data are written to the magnetic disk in the elapsed period described above.

When the specific period has elapsed since the reception of the write command (4), the write command (4) completion response is transmitted to the host computer. Following that, the write command (3) data and the write command (4) data are written to the magnetic disk.

In other words, in a single drive process, before transmitting the write command completion response to the host computer, as much of the write command data temporarily stored in the buffer memory is written to the magnetic disk until the specific period elapses. The specific period should be set beforehand to fall within a command completion response reception queuing period in which the error of not receiving the command completion response is detected by the OS of the host computer. Furthermore, the specific period should preferably be close to the command completion response reception queuing period.

Thus, the writing delay to the magnetic disk caused due to the vibrations can be foreseen, transmission of the write command completion responses corresponding to the write commands that are received after generation of vibrations can be temporarily deferred, and in the meantime, the write command data temporarily stored in the buffer memory can be written to the magnetic disk, thus freeing the buffer memory area. Consequently, new write commands can be received, the write command data corresponding to the write commands can be temporarily stored in the buffer memory, the corresponding command completion responses can be transmitted to the host computer, and detection of the error of not receiving the write command completion responses by the host computer can be avoided as far as possible.

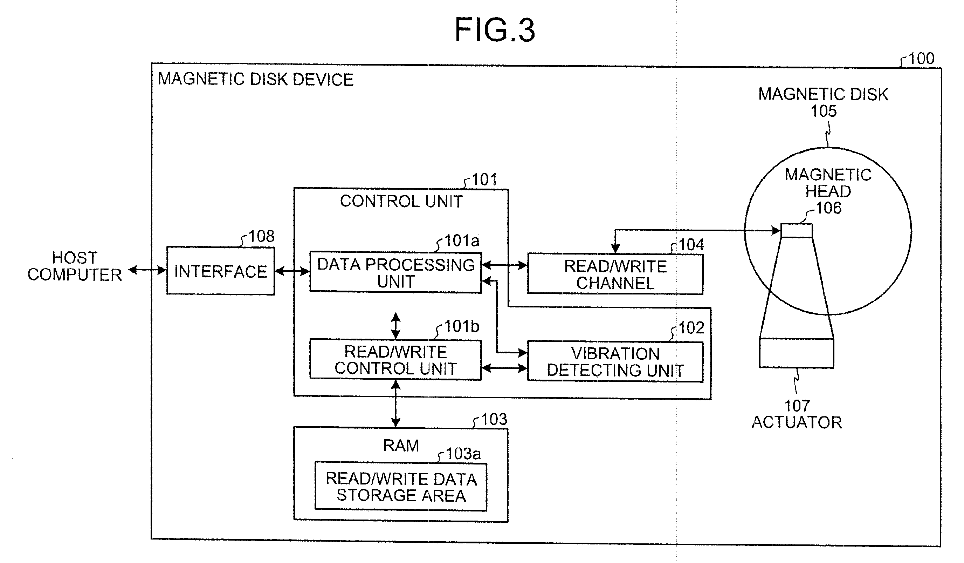

A structure of the magnetic disk device according to the embodiment of the present invention is explained below. Fig. 3 is a functional block diagram of the magnetic disk device according to the embodiment. As shown in Fig. 3, a magnetic disk device 100 includes a control unit 101, a random access memory (RAM) 103, a read/write channel 104, a magnetic disk 105, a magnetic head 106, an actuator 107, and an interface 108 that passes on the data exchanged between the magnetic disk device 100 and the host computer. The remaining structure of the magnetic disk device 100 is similar to a conventional magnetic disk device, and therefore the explanation thereof is omitted.

The control unit 101 executes various processes using a control program and control data stored in a not shown read-only memory (ROM). In close relevance to the embodiment, the control unit 101 includes a data processing unit 101a, a read/write control unit 101b, and a vibration detecting unit 102. The remaining structure the magnetic disk device 100 is similar to a conventional magnetic disk device, and therefore the explanation thereof is omitted.

The data processing unit 101a temporarily stores the data acquired from the host computer in a read/write data storage area 103a via the read/write control unit 101b. The data processing unit 101a also reads the data from the read/write data storage area 103a via the read/write control unit 101b and writes the data to the magnetic disk 105 via the read/write channel 104.

Depending on the request from the host computer, the data processing unit 101a temporarily stores in the read/write data storage area 103a the data read from the magnetic disk 105 via the read/write control unit 101b. The data processing unit 101a also reads the data from the read/write data storage area 103a via the read/write control unit 101b and transmits the data to the host computer via the interface 108.

The read/write control unit 101b is positioned between the data processing unit 101a and the read/write data storage area 103a. The read/write control unit 101b temporarily queues the commands from the host computer, and relays to the data processing unit 101a and the read/write data storage area 103a the command data corresponding to the commands.

When the vibration detecting unit 102 detects the vibrations in the magnetic disk device 100, the read/write control unit 101b controls a command data read/write sequence and a command completion response transmission sequence accordingly.

Specifically, when the vibration detecting unit 102 detects the vibrations in the magnetic disk device 100, but determines that a vibration intensity or amplitude and a detection count are less than predetermined threshold values (hereinafter, the condition will be referred to as "detection of minor vibrations"), the read/write control unit 101b writes the write command data to the magnetic disk 105 in least units (for example, in units of sectors). The situation in which the read/write control unit 101b writes the write command data in least units is explained below.

When the write command data corresponding to each write command is a data string, under normal conditions when no vibrations are detected, in order that queuing period does not occur for reading the subsequent data, the read/write control unit 101b writes the write data to the magnetic disk 105 in such a way that continuity of the data string is preserved. On the other hand, when minor vibrations are detected in the magnetic disk device 100, anticipating the inevitable queuing for reading the subsequent data, the read/write control unit 101b discontinues writing the write data in the manner of preserving the continuity of the data strings and starts writing in least units even if the write data is a data string.

Thus, when minor vibrations are detected, instead of writing the write command data as a large continuous unit, the read/write control unit 101b first frees the buffer memory serving as a temporary storage area by writing the write command data in least units, thus avoiding delay in freeing the buffer area occupied by the write command data.

When it is determined from vibration detection signals issued by the vibration detecting unit 102 that the magnetic disk device 100 is subjected to vibrations and that the vibration intensity and the detection count are greater than the predetermined threshold values (hereinafter, the condition will be referred to as "vibration detection"), the read/write control unit 101b transfers to the buffer memory the write command data corresponding to the write commands.

However, the read/write control unit 101b writes as much of the write command data already temporarily stored in the buffer memory to the magnetic disk 105, on a first-in first-out basis, until the specific period elapses since the reception of the write command after vibration detection. Thus, when there is a likelihood of the writing delay due to the vibrations, the read/write control unit 101b is able to first free the buffer memory before transmitting to the host computer the write command completion response corresponding to the latest write command.

When the vibrations are detected, the read/write control unit 101b limits the temporary storage area for the read command data that is secured in the read/write data storage area 103a to a certain amount, preferably to a minimum (for example, to the least unit of one sector). Consequently, after detection of vibrations, the read/write control unit 101b can carry out temporary storage of the write command data in the buffer memory on a priority basis by limiting the temporary storage of the read command data and enabling avoiding delay in transmitting the write command completion responses to the host computer.

The vibration detecting unit 102 includes functions of not shown position-signal retrieving unit, position-signal storage unit, and vibration-detection storage unit, and is configured by a firmware program in the embodiment. The vibration detecting unit 102 detects the vibrations in the magnetic disk device 100. Specifically, the vibration detecting unit 102 inputs position signals read from the magnetic disk 105 and regenerated by the data processing unit 101a to the position-signal retrieving unit. Every acquired position signal is stored in the position-signal storage unit and converted to an absolute value. A lowpass filter is applied to every absolute value converted from the position signal to create vibration detection data, which is stored in the vibration-detection storage unit.

Specifically, the vibration detection data are created based on a distance by which a head position is displaced from an existing read/write position and a duration for which the head position is displaced from the existing read/write position. The vibration detecting unit 102 monitors the vibrations from the vibration detection data thus stored, and when the vibrations are detected (for example, when the value of the vibration detection data is greater than a predetermined vibration threshold value), notifies the detection of vibrations to the read/write control unit 101b of the control unit 101. Alternatively, an acoustic emission (AE) sensor can be placed adjacent to the magnetic head 106 or the actuator 107 to constantly detect the vibrations, and the AE sensor can detect and monitor the vibrations by inputting a vibration notification signal to an input-output terminal of the control unit 101.

The vibration threshold value includes a two-step value. In other words, the vibration threshold value includes a first vibration threshold value and a second vibration threshold value greater than the first vibration threshold value. 1 an the vibration detection data is greater than the first vibration threshold value, but less than the second vibration threshold value, the vibration detecting unit 102 notifies the detection of minor vibrations to the read/write control unit 101b of the control unit 101. When the vibration detection data exceeds the second vibration threshold value, the vibration detecting unit 102 notifies the detection of (major) vibrations to the read/write control unit 101b of the control unit 101.

The RAM 103 stores data necessary for each process performed by the control unit 101. In close relevance to the embodiment, the RAM 103 includes the read/write data storage area 103a that serves as the buffer memory. The read/write data storage area 103a temporarily stores the write command data from the host computer and the write command data read from the magnetic disk 105. However, under normal conditions (for example, when no vibrations are detected in the magnetic disk device 100), areas allocated to different data in the read/write data storage area 103a can be changed as the situation demands.

The read/write channel 104 acquires the regenerated data and servo data from the magnetic head 106, and outputs the acquired regenerated data and the servo data to the control unit 101. The read/write channel 104 reads from the RAM 103 the write command data transmitted from the host computer and passes on the write command data to the magnetic head 106 for writing to the magnetic disk 105.

The magnetic disk 105 is a storage medium formed by coating a disk-shaped substrate made of metal or glass with a magnetic recording layer. When writing the data to the magnetic disk 105, a magnetic field is imparted from the magnetic head 106 to a data writing area of the magnetic disk 105 and the data is written by changing a magnetized state of the magnetic substance on the surface of the magnetic disk 105. When reading the data from the magnetic disk 105, the magnetic head 106 moves to the storage area of the magnetic disk 105 from where the data is to be read, and the data is read by scanning the magnetized state of the magnetic substance of the magnetic disk 105.

The magnetic head 106 writes the data to and reads the data from the magnetic disk 105. The magnetic head 106 reads from the magnetic disk 105 the servo data for controlling a track position etc. and outputs to the read/write channel 104 the servo data along with the data read from the magnetic disk 105.

The actuator 107 includes a not shown voice coil motor (VCM) that causes the magnetic head 106 to move according to a control current output from a not shown servo combo chip.

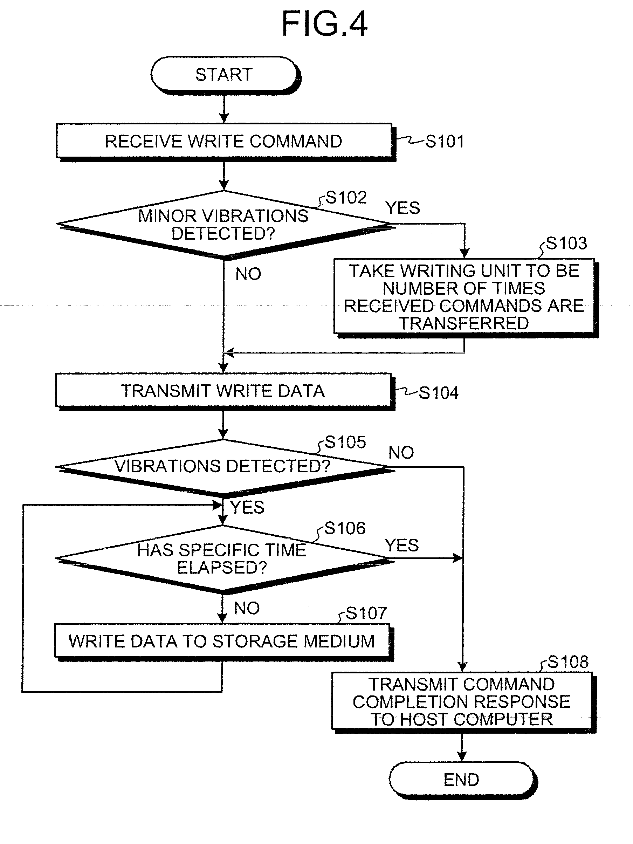

A process executed in the magnetic disk device shown in Fig. 3 upon reception of write commands is explained below. Fig. 4 is a flowchart of the process executed in the magnetic disk device shown in Fig. 3 upon reception of the write commands. As shown in Fig. 4, the data processing unit 101a receives the write commands from the host computer and temporarily queues the write commands in the read/write control unit 101b (step S101).

The read/write control unit 101b determines whether the vibration detecting unit 102 has notified the detection of minor vibrations (step S102). If the detection of minor vibrations is notified (Yes at step S102), the read/write control unit 101b takes the unit of writing to be the number of times the received commands are transferred. In other words, the read/write control unit 101b exerts a control taking the number of times the data corresponding to the received commands is transferred to be the least unit of writing (step S103). In the absence of notification of detection of even minor vibrations (No at step S102), the process proceeds to step S104.

At step S104, the read/write control unit 101b transmits the write command data received from the host computer to the read/write data storage area 103a. Next, the read/write control unit 101b determines whether the vibration detecting unit 102 has notified the detection of (major) vibrations (step Sl05). If detection of (major) vibrations is notified (Yes at step S105), the read/write control unit 101b determines whether the specific period has elapsed since the write command reception at step S101 (step S106). In the absence of notification of detection of (major) vibrations (No at step 105), the process proceeds to step S108.

If it is determined that the specific period has elapsed since the write command reception at step S101 (Yes at step S106), the process proceeds to step S108. On the other hand, if it is determined that the specific period has not elapsed since the write command reception at step S101 (No at step S106), the write command data temporarily stored in the read/write data storage area 103a are written to the magnetic disk 105 (step S107), and the process returns to step S106.

At step S108, the read/write control unit 101b transmits a write command completion response to the host computer via the data processing unit 101a.

Thus, when minor vibrations are detected, the read/write control unit 101b switches to writing the write data from the read/write data storage area 103a to the magnetic disk 105 in least units. When major vibrations are detected, before the write command completion response is transmitted to the host computer, the data from the read/write data storage area 103a is written to the magnetic disk 105 until the specific period elapses since the reception of the latest write command. Thus, by employing different controls according to the level of the vibrations, the write command data temporarily stored in the read/write data storage area 103a can be written to the magnetic disk 105 in a manner sensitive to the prevailing situation. Also, the time required for writing the write command data to the magnetic disk 105 can be reduced. Additionally, the read/write data storage area 103a can be kept available by employing appropriate method according to the situation.

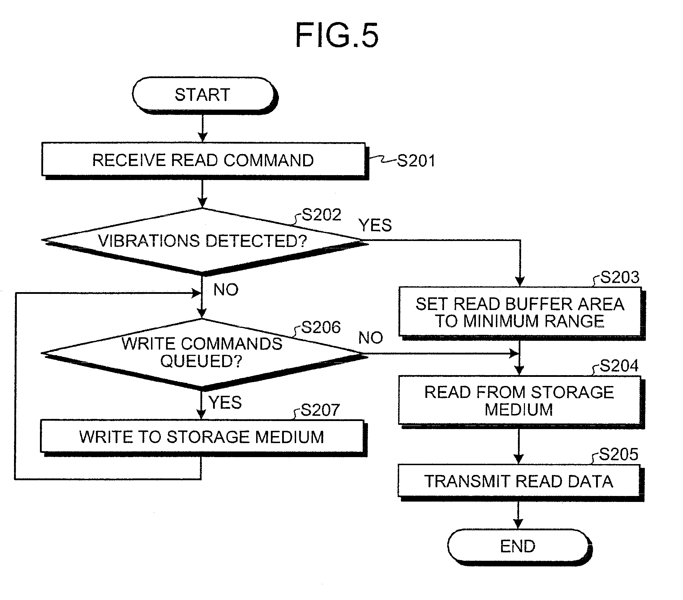

Next, a process executed in the magnetic disk device shown in Fig. 3 upon reception of read commands is explained below. Fig. 5 is a flowchart of the process executed in the magnetic disk device shown in Fig. 3 upon reception of the read commands. As shown in Fig. 5, the data processing unit 101a receives the read commands from the host computer and temporarily queues the read commands in the read/write control unit 101b (step S201).

The read/write control unit 101b determines whether the detection of major vibrations is notified by the vibration detection signals issued by the vibration detecting unit 102 (step S202). If the detection of major vibrations is notified (Yes at step S202), the read/write control unit 101b sets and limits to a minimum range a read buffer area of the read/write data storage area 103a (step 5203).

The read/write control unit 101b reads from the magnetic disk 105 the data corresponding to the read command and temporarily stores the data in the read buffer area of the read/write data storage area 103a (step 5204). The read/write control unit 101b transmits to the host computer the read command data temporarily stored in the read buffer area of the read/write data storage area 103a, via the data processing unit 101a (step S205).

In the absence of notification of detection of major vibrations in the form of the vibration detection signals issued by the vibration detecting unit 102 (No at step S202), the read/write control unit 101b determines whether any write commands are temporarily queued (step S206). If write commands are queued (Yes at step S206), the read/write control unit 101b reads from the read/write data storage area 103a the write command data corresponding to the write commands and writes the data to the magnetic disk 105 (step S207). When the step S207 is completed, the process returns to step S206.

If write commands are not queued (No at step S206), the process returns to step S204.

Thus, upon reception of the read command, when major vibrations are detected, the read buffer area of the read/write data storage area 103a is restricted, enabling the write command data to be temporarily stored on a priority basis and thus avoiding delay in transmitting the write command completion responses to the host computer. Also, delay in transmitting the read command completion responses to the host computer can be avoided because the read command data cannot even be temporarily stored in the read/write data storage area 103a to begin with.

According to the above embodiment, there is no delay in transmission of the command completion responses even during major vibrations. Therefore, system interruptions such as appearance of blue screen in Windows (registered trademark) OS can be prevented because there is no detection of delay timeout by the OS of the host computer. In compact computers such as the notebook-size personal computers in which the speakers are disposed adjacent to the storage device, generation of error due high volume of sound produced by the speakers can be prevented, ensuring reliability of a user of the host computer.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth. The effects due to the embodiments are not to be thus limited.

All the automatic processes or operations explained in the present embodiment can be, entirely or in part, carried out manually. Similarly, all the manual processes explained in the present embodiment can be, entirely or in part, carried out automatically by a known method. The process procedures, the control procedures, specific names, and data including various parameters mentioned in the description and drawings can be changed as required unless otherwise specified.

The constituent elements of the device illustrated may not necessarily physically resemble the structures shown in the drawings. For instance, the device need not necessarily have the structure that is illustrated. The device as a whole or in parts can be broken down or integrated either functionally or physically in accordance with the load or how the device is to be used.

The process or operation functions performed by the device can be entirely or partially realized by a central processing unit (CPU) (or a microcomputer such as a micro processing unit (MPU) or a micro controller unit (InCU)) or a computer program executed by the CPU (or a microcomputer such as MPU, MCU) or by a hardware using wired logic.

According to the present invention, when there is a delay in writing due to vibrations in a storage device connected to a host computer due to which a command completion response for a write command is received by the host computer from the storage device after a specific period elapses, it is not perceived by the host computer as an error fatal enough to cause a system shut down.

According to the present invention, when vibrations are detected, write data stored in a data buffer is written to a storage medium in a specific period. Thus, free data buffer area can be secured to accommodate new commands from a host computer, for which the command completion responses can be promptly transmitted to the host computer.

According to the present invention, when vibrations are detected, the command completion responses are promptly transmitted to the host computer, thus forestalling any error detection by the host computer due to delay in reception of the command completion response.

According to the present invention, when the vibrations having an intensity and a count greater than predetermined threshold values are detected, the write data stored in the data buffer is preferentially written to the storage medium in a specific time. Consequently, free data buffer area can be selectively secured depending on the type of vibrations and the command completion responses for new commands can be promptly transmitted to the host computer by receiving new commands.

According to the present invention, when the vibrations having the intensity and the count greater than the predetermined threshold values are detected, a read data area can be restricted. Consequently, depending on the type of vibrations, the write data can be selected over a read data to be temporarily stored in the data buffer, and the command completion responses in response to the write data can be promptly transmitted to the host computer by writing the write data first.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A storage device control apparatus that controls a storage device so that data is exchanged between a host computer and a storage medium via a data buffer that temporarily stores the data corresponding to commands received from the host computer, the storage device control apparatus comprising:
a vibration detecting unit that detects vibrations in the storage device; and
a data writing control unit that preferentially writes the write data stored in the data buffer to the storage medium in a specific period when the vibrations are detected in the storage device by the vibration detecting unit.

2. The storage device control apparatus according to claim 1, wherein command completion responses for the commands received from the host computer after the vibrations are detected by the vibration detecting unit are transmitted to the host computer after the data writing control unit preferentially writes the write data temporarily stored in the data buffer to the storage medium in the specific period.

3. The storage device control apparatus according to claim 1, further comprising a vibration intensity determining unit that determines whether an intensity and a count of the vibrations detected by the vibration detecting unit are greater than predetermined threshold values,
wherein when the vibrations are detected by the vibration detecting unit and when it is determined by the vibration intensity determining unit that the intensity and the count of the vibrations are greater than the predetermined threshold values, the data writing control unit preferentially writes the write data stored in the data buffer to the storage medium in the specific period.

4. The storage device control apparatus according to claim 3, wherein when the vibrations are detected by the vibration detecting unit and when it is determined by the vibration intensity determining unit that the intensity and the count of the vibrations are not greater than the predetermined threshold value, the data writing control unit preferentially writes the write data to the storage medium in units of write data for each write command in the specific period.

5. The storage device control apparatus according to any preceding claim, wherein the data buffer includes a write data area for temporary storage of the write data from the host computer and a read data area for temporary storage of the read data read from the storage medium, the storage device control apparatus further comprising:
an area restricting unit that restricts the read data area when the vibrations are detected by the vibration detecting unit and when it is determined by the vibration intensity determining unit that the intensity and the count of the vibrations are greater the predetermined threshold values.

6. A storage device that stores data in a storage medium and exchanges the data between a host computer and the storage medium corresponding to commands from the host computer, the storage device comprising:
a data buffer that temporarily stores the data received from the host computer;
a vibration detecting unit that detects vibrations in the storage device; and
a data writing control unit that preferentially writes the write data stored in the data buffer to the storage medium in a specific period when the vibrations are detected in the storage device by the vibration detecting unit.

7. The storage device according to claim 6, wherein command completion responses for the commands received from the host computer after the vibrations are detected by the vibration detecting unit are transmitted to the host computer after the data writing control unit preferentially writes the write data temporarily stored in the data buffer to the storage medium in the specific period.

8. The storage device according to claim 6, further comprising a vibration intensity determining unit that determines whether an intensity and a count of the vibrations detected by the vibration detecting unit are greater than predetermined threshold values,
wherein when the vibrations are detected by the vibration detecting unit and when it is determined by the vibration intensity determining unit that the intensity and the count of the vibrations are greater than the predetermined threshold values, the data writing control unit preferentially writes the write data stored in the data buffer to the storage medium in the specific period.

9. The storage device according to claim 8, wherein when the vibrations are detected by the vibration detecting unit and when it is determined by the vibration intensity determining unit that the intensity and the count of the vibrations are not greater than the predetermined threshold values, the data writing control unit preferentially writes the write data to the storage medium in units of write data for each write command in the specific period.

10. The storage device according to any of claims 6 to 9, further comprising:
a write data area for temporary storage of the write data from the host computer;
a read data area for temporary storage of the read data read from the storage medium; and
an area restricting unit that restricts the read data area when the vibrations are detected by the vibration detecting unit and when it is determined by the vibration intensity determining unit that the intensity and the count of the vibrations are greater than the predetermined threshold values.

11. A data storage control method for controlling a storage device so that data is exchanged between a host computer and a storage medium via a data buffer that temporarily stores the data corresponding to commands received from the host computer, the storage control method comprising:
detecting vibrations in the storage device; and
preferentially writing the write data stored in the data buffer to the storage medium in a specific time when the vibrations are detected at the detecting.

12. The data storage control method according to claim 11, wherein command completion responses for the commands received from the host computer are transmitted to the host computer after the write data temporarily stored in the data buffer is preferentially written to the storage medium in the specific period upon the vibrations being detected.
